# DEMANDE DE BREVET EUROPEEN

(11) **EP 3 594 586 A1**
(43) Date de publication de la demande: **15.01.2020**
(21) Numéro de dépôt: 19184074.3
(22) Date de dépôt: 03.07.2019
(51) Int. Cl.: F24F 13/30, F24F 12/00, F24F 13/08, F24F 13/22

(54) **DISPOSITIF DE RÉCUPERATION D'ÉNERGIE ENTRE FLUIDES GAZEUX ET PROCÉDÉ DE FABRICATION D'UN TEL DISPOSITIF**

(30) Priorité: 06.07.2018 FR 1856246
(71) Demandeur: Commissariat à l'énergie atomique et aux énergies alternatives, 75015 Paris (FR)
(72) Inventeur: MARIOTTO, Mathieu, 38054 GRENOBLE CEDEX 09 (FR)
(74) Mandataire: Brevalex

(57) **Abrégé**

Dispositif de récupération d'énergie entre de l'air vicié et de l'air neuf comportant une zone d'échange thermique (E) comprenant premier chemin d'écoulement (C1) pour l'air vicié, et un deuxième chemin d'écoulement (C2) pour l'air neuf, les premier (C1) et deuxième (C2) chemins d'écoulement étant en échange énergétique l'un avec l'autre et séparés de manière étanche l'un de l'autre, et un premier distributeur (D1) connecté à une première extrémité des chemins et un deuxième distributeur (D2) connecté à une deuxième extrémité des chemins, les distributeurs (D1, D2) comportant des premiers canaux connectés au premier chemin (C1) pour l'air vicié, et des deuxièmes canaux connectés au deuxième chemin (C2) pour l'air neuf, les premiers et deuxièmes canaux étant isolés de manière étanche. Le premier (D1) et le deuxième (D2) distributeur comportent des pièces en toile formant un ensemble étanche à l'air et formant des parois des premiers et deuxièmes canaux.

## Description

### DOMAINE TECHNIQUE ET ÉTAT DE LA TECHNIQUE ANTÉRIEURE

La présente invention se rapporte à un dispositif de récupération d'énergie entre fluides gazeux, par exemple mis en oeuvre dans un système de ventilation, et un procédé de fabrication d'un tel dispositif.

Le renouvellement de l'air dans les espaces accueillant des personnes est obtenu au moyen d'un système de ventilation assurant une extraction de l'air vicié et une entrée d'air « neuf» provenant de l'extérieur. Notamment en hiver et en été, la température de l'air extrait est sensiblement différente de celle de l'air « neuf ». Afin de récupérer la chaleur de l'air extrait en hiver, un échangeur de chaleur est mis en oeuvre dans le système de ventilation afin de provoquer un échange thermique entre l'air extrait et l'air introduit, de sorte à échauffer l'air avant son introduction dans l'espace dont on renouvelle l'air.

Il existe plusieurs dispositifs permettant de récupérer cette énergie en la transférant entre l'air extrait et l'air introduit.

Un des dispositifs est appelé « roue enthalpique » ou « roue thermique », il s'agit d'un échangeur de chaleur rotatif comportant une roue munie d'une structure alvéolée accumulant la chaleur. Sur une moitié de la roue, l'air sortant réchauffe les parois ; sur l'autre, l'air entrant récupère la chaleur des parois. Une rotation lente de la roue permet de faire passer la partie chaude de la roue vers le flux entrant et la partie froide revient ainsi vers le flux sortant pour être à nouveau réchauffée.

La roue est logée dans un boîtier de section frontale carrée. Ce dispositif présente plusieurs inconvénients. La rotation de la roue est obtenue au moyen d'un moteur électrique, son fonctionnement consomme de l'énergie. En outre, la roue n'assure pas une séparation parfaitement étanche entre le flux d'air vicié et le flux d'air neuf, il en résulte que l'air neuf est déjà en partie vicié en entrant dans le volume dont on souhaite renouveler l'air. En outre, il résulte de la forme du boîtier un volume mort au niveau des angles. De plus l'intégration dans un zone de faible hauteur, par exemple sous le plafond n'est pas aisée.

Un autre de ces dispositif est de type passif, il comporte un boîtier dont le volume est divisé en deux de manière étanche par une ou des tôles, et ménageant deux chemins de circulation isolées de manière étanche l'une de l'autre et en échange thermique l'un avec l'autre. Un chemin est alimenté par l'air vicié et l'autre chemin est alimenté par l'air neuf. De préférence, l'air neuf et l'air vicié circulent à contre-courant et le transfert de chaleur a lieu à travers la ou les tôles.

En assemblant plusieurs de ces dispositifs il est possible de réaliser des murs d'échangeurs qui peuvent être plus facilement intégrables dans des espaces de faible hauteur. Un soin particulier est apporté aux connexions des chemins au volume d'air à renouvelée et au volume fournissant l'air neuf pour éviter tout mélange. Ces connexions peuvent présenter des formes complexes et leur montage et leur démontage peuvent être complexes.

### EXPOSÉ DE L'INVENTION

C'est par conséquent un but de la présente invention d'offrir un dispositif de récupération d'énergie entre au moins deux flux de gaz, par exemple pour une application à un système de ventilation, offrant une réalisation simplifiée et une adaptabilité améliorée à différentes configurations d'environnement

Le but énoncé ci-dessus est atteint par un dispositif de récupération d'énergie entre au moins deux flux de gaz comportant une zone d'échange au moins thermique comportant deux chemins de circulation, séparés l'un par rapport à l'autre de manière étanche au moins aux gaz et en échange thermique l'un avec l'autre, la zone d'échange au moins thermique comportant une première extrémité, dans laquelle débouchent les deux chemins de circulation, et une deuxième extrémité dans laquelle débouchent les deux chemins de circulation. Le récupérateur comporte également un premier distributeur fluidique connecté de manière étanche à la première extrémité, et un deuxième distributeur fluidique connecté de manière étanche à la deuxième extrémité. Au moins l'un parmi le premier et le deuxième distributeur est réalisé en toile étanche aux gaz et est fixé sur la première ou la deuxième extrémité de la zone d'échange au moins thermique, de sorte que le au moins un distributeur soit connecté de manière étanche à la première ou la deuxième extrémité, et assure une séparation étanche entre les gaz circulant dans les deux chemins de circulation. De manière très avantageuse, la fixation de la toile est obtenue au moyen de profilés dans lesquels les bords de la toile sont par exemple pincés ou serrés.

De manière préférée les deux distributeurs sont réalisés en toile.

La mise en oeuvre d'un matériau sous forme de toile pour fabriquer le ou les distributeurs permet de réaliser relativement aisément des formes complexes, et permet de s'adapter à des configurations très variées. La réalisation de ces distributeurs ne requiert pas des moyens lourds de fabrication, ni de transport. Par exemple les distributeurs peuvent être fabriqués sur le lieu équipé du dispositif de récupération d'énergie.

En outre, les distributeurs sont légers par rapport à des distributeurs en tôle. En outre leur démontage est facilité, ce qui améliore la maintenance. De plus des distributeurs en toile synthétique, par exemple en polymère, sont résistants à la corrosion et sont donc adaptés par exemple à une application en présence d'air salin, tout en présentant un coût de revient réduit par rapport à d'autres matériaux utilisés dans ce type d'environnement, par exemple l'acier inoxydable, et qui requièrent généralement des traitements ultérieurs.

La fixation par des systèmes de profilés permet un montage simple assurant une étanchéité de manière efficace et durable. En outre le démontage et remontage en cas de maintenance sont aisés et peuvent être répétés fréquemment tout en assurant un fonctionnement optimal du dispositif.

Par exemple, la toile est en polychlorure de vinyle.

Par exemple la toile comporte plusieurs pièces fixées les unes aux autres de manière étanche pour former des canaux pour guider les fluides gazeux vers les chemins de circulation dédiés.

La zone d'échange au moins thermique peut comporter plusieurs modules échangeurs thermiques empilés en ligne et en colonne.

La zone d'échange peut également être le lieu de transfert de vapeur d'eau.

La présente invention a alors pour objet un dispositif de récupération d'énergie entre au moins un premier et un deuxième fluides gazeux comportant une zone d'échange d'énergie comprenant au moins un premier chemin d'écoulement pour le premier fluide, et au moins un deuxième chemin d'écoulement pour le deuxième fluide, les premier et deuxième chemins d'écoulement s'étendant entre une première extrémité et une deuxième extrémité de la zone d'échange d'énergie, les premier et deuxième chemins d'écoulement étant en échange énergétique l'un avec l'autre et séparés l'un de l'autre de manière étanche au moins aux gaz, et un premier distributeur fluidique connecté à la première extrémité et un deuxième distributeur fluidique connecté à la deuxième extrémité, chaque premier et deuxième distributeur comportant au moins un premier canal connecté au premier chemin pour assurer l'alimentation en premier fluide et/ou la collecte dudit premier fluide, et au moins un deuxième canal connecté au deuxième chemin et assurant une alimentation en deuxième fluide et/ou une collecte du deuxième fluide, le premier canal et le deuxième canal étant isolés de manière étanche l'un par rapport à l'autre. Le premier et/ou le deuxième distributeur comportent au moins une pièce en toile étanche aux fluides gazeux formant des parois des premier et deuxième canaux.

Dans un exemple de réalisation, le premier et/ou le deuxième distributeur comportent plusieurs pièces en toile fixées les unes aux autres de manière étanche, de sorte à délimiter les premier et deuxième canaux, par exemple par thermosoudage ou thermocollage.

Par exemple, la au moins une pièce en toile est en matériau synthétique étanche au gaz. La au moins une pièce en toile peut être en polychlorure de vinyl. En variante, la au moins une pièce en toile comporte un matériau support et un revêtement étanche aux fluides gazeux.

Selon une caractéristique avantageuse, le dispositif de récupération comporte des moyens de fixation des bords de la au moins une pièce en toile du premier et/ou du deuxième distributeur à la zone d'échange d'énergie, les moyens de fixation comprenant des profilés situés au niveau de la première et/ou de la deuxième extrémité de la zone d'échange d'énergie et auxquels les bords de la au moins une pièce en toile sont fixés.

Par exemple les bords de la au moins une pièce en toile du premier et/ou du deuxième distributeur comportent des surépaisseurs montées dans les profilés.

Des moyens d'étanchéité peuvent être prévus entre les bords de la toile et les profilés.

Selon une caractéristique additionnelle, la au moins une pièce en toile comporte des renforts.

Selon une autre caractéristique additionnelle, la au moins une pièce en toile a une épaisseur comprise entre 1 mm et 10 mm.

La zone d'échange thermique peut comporter au moins un premier ensemble de n modules échangeurs thermiques, n étant supérieur ou égal à 2, chacun des modules échangeurs comporte au moins une portion du premier chemin et du deuxième chemin d'écoulement, chaque module échangeur comportant une première face comportant au moins une ouverture d'accès à chaque premier et deuxième chemin, et une deuxième face comportant au moins une ouverture d'accès à chaque premier et deuxième chemin.

Par exemple, les modules échangeurs sont superposés et juxtaposés de sorte à former un premier mur.

La zone d'échange thermique peut comporter en outre au moins un deuxième ensemble de n modules échangeurs disposés sous forme d'un deuxième mur, chacun des modules échangeurs comportant une portion du premier chemin et du deuxième chemin d'écoulement, chaque module comportant une première face comportant au moins une ouverture d'accès à chaque premier et deuxième chemin, et une deuxième face comportant au moins une ouverture d'accès à chaque premier et deuxième chemin, ledit dispositif comportant des moyens de connexion étanche entre le premier ensemble et le deuxième ensemble, de sorte que les chemins d'écoulement dans un module échangeur du premier ensemble se poursuivent dans un module échangeur du deuxième ensemble.

Par exemple, pour l'un et/ou l'autre des premier et deuxième ensembles, les modules sont disposés de sorte qu'au moins une partie des modules présente une ouverture d'accès à un des chemins directement adjacente à l'ouverture d'accès au même chemin d'un module directement adjacent.

Dans un exemple avantageux, les profilés assurent également le maintien des modules échangeurs les uns par rapport aux autres.

Les modules échangeurs sont avantageusement inclinés de sorte à assurer l'évacuation des condensats par gravité des premier et deuxième chemins.

De manière préférée, les circulations dans le premier chemin et le deuxième chemin sont à contre-courant l'une de l'autre.

La présente invention a également pour objet un système de ventilation comportant au moins un dispositif de récupération d'énergie selon l'invention et des moyens de connexion entre le premier canal et le deuxième canal du premier distributeur et un premier volume dont on souhaite renouveler l'air, et des moyens de connexion entre le premier canal et le deuxième canal du deuxième distributeur et un deuxième volume formant source d'air pour renouveler l'air du premier volume.

La présente invention a également pour objet un procédé de fabrication d'un dispositif d'échange thermique selon l'invention comportant :
a) la réalisation de la zone d'échange thermique,
b) la réalisation des premier et/ou deuxième distributeurs à partir d'au moins une pièce en toile étanche aux fluides gazeux,
c) la connexion de manière étanche du premier et du deuxième distributeur à la zone d'échange thermique.

L'étape a) peut comporter l'empilement de modules échangeurs thermiques.

L'étape b) peut comporter un assemblage de plusieurs pièces en toile étanche aux fluides gazeux, l'assemblage entre les pièces en toile étant étanche, par exemple réalisé par thermocollage ou thermosoudage.

L'étape c) peut mettre en oeuvre des profilés dans lesquels des bords de la au moins une pièce en toile sont maintenus serrés.

### BRÈVE DESCRIPTION DES DESSINS

La présente invention sera mieux comprise sur la base de la description qui va suivre et des dessins en annexe sur lesquels:
- la figure 1 est une vue en perspective d'un exemple de dispositif de récupération d'énergie selon l'invention mettant en oeuvre deux « murs » d'échangeurs en série,
- la figure 2 est une vue en perspective du dispositif de la figure 1 sans distributeur,
- la figure 3 est une vue en perspective d'un distributeur mis en oeuvre dans le dispositif de la figure 1,
- la figure 4 est une vue de détail d'un exemple de profilé pouvant être mise en oeuvre dans le dispositif selon l'invention,
- les figures 5A et 5B sont de représentation en perspective d'autres exemples de modes de fixation des bords du distributeur,
- les figures 6A et 6B sont des vues en coupe transversales de profilés assurant à la fois la fixation du distributeur et le maintien des modules échangeurs.
- les figures 7A et 7B sont des vues en coupe transversales de profilés assurant la connexion en série de deux murs de modules échangeurs,
- la figure 8 est une vue en perspective d'un autre exemple de distributeur selon l'invention,
- la figure 9 est une représentation schématique d'un dispositif de récupération avec une circulation des fluides différente,
- les figures 10A et 10B sont des vues en perspective d'un autre exemple de dispositif de récupération d'énergie,
- la figure 10C est une vue en perspective d'un distributeur représenté seul du dispositif des figures 10A et 10B,
- la figure 11 est une représentation schématique d'un dispositif de récupération d'énergie présentant deux murs d'échangeurs connectés en série et inclinés l'un par rapport à l'autre,
- la figure 12 est une vue en perspective partiellement arrachée d'une réalisation pratique du dispositif de la figure 11,
- la figure 13 est une vue en éclatée d'un exemple de module échangeur représenté seul,
- la figure 14 est une vue de détail d'un autre exemple de distributeur selon l'invention,
- la figure 15 est une représentation schématique d'un exemple de système de ventilation comportant un dispositif de récupération d'énergie selon l'invention.

### EXPOSÉ DÉTAILLÉ DE MODES DE RÉALISATION PARTICULIERS

Dans la description qui va suivre, l'invention sera décrite plus particulièrement dans une application à un système de ventilation assurant un renouvellement d'air. La présente invention peut s'appliquer à tout système mettant en oeuvre une récupération d'énergie entre au moins deux fluides gazeux, par exemple les systèmes utilisés dans les procédés de récupération d'énergie gaz/gaz, à l'échelle industrielle. Il s'agit par exemple des procédés de production d'énergie, de récupération à partir des fumées. Le dispositif de récupération peut être utilisé dans l'industrie chimique, alimentaire, pharmaceutique, biochimique. Il peut être mis en oeuvre pour réaliser un préchauffage d'un gaz comburant ou combustible, et un gaz de combustion.

Dans la présente demande, on entend par « échange d'énergie » ou « échange énergétique », au moins un échange de chaleur sensible, cet échange pouvant être accompagné d'un échange de chaleur latente, par exemple sous forme de vapeur d'eau entre les deux fluides gazeux.

L'échange d'énergie a lieu principalement dans les modules et non dans les distributeurs. Dans le cas d'échange de vapeur d'eau celui-ci a lieu uniquement dans les modules, les distributeurs délimitant des canaux étanches entre eux aux gaz et à la vapeur d'eau.

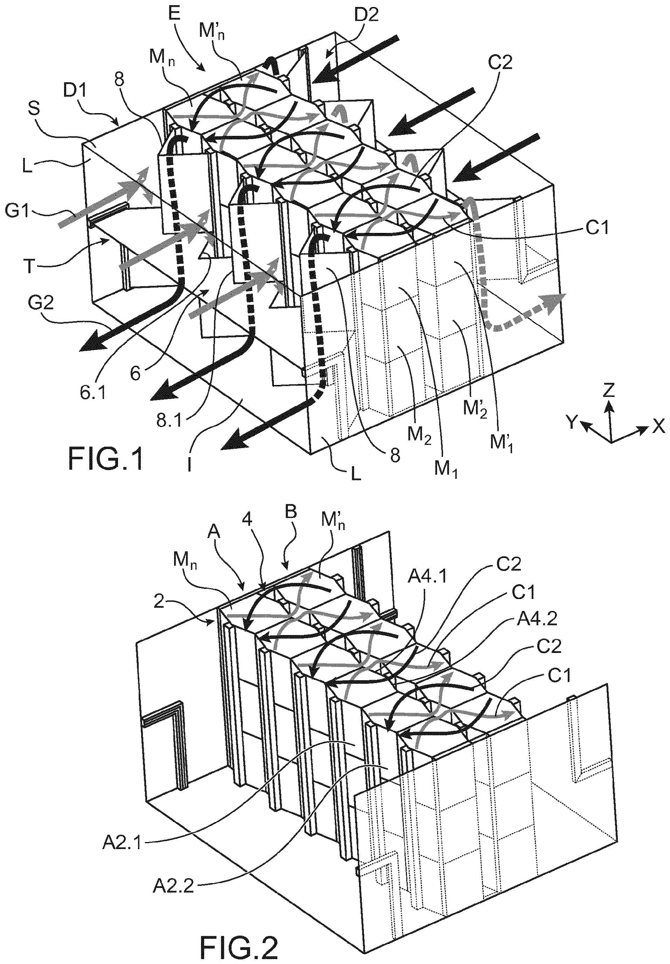

Sur la figure 1, on peut voir un exemple d'un dispositif de récupération d'énergie selon l'invention. Celui-ci est par exemple disposé entre une pièce accueillant des personnes et l'environnement extérieur.

Le dispositif de récupération d'énergie comporte une zone d'échange d'énergie M et deux distributeurs D1, D2 de part et d'autre des modules échangeurs. Dans l'application à un système de ventilation, la zone d'échange permet un transfert de vapeur d'eau entre deux fluides. Dans un autre exemple, l'échange d'humidité peut ne pas être permis.

La zone d'échange thermique E comporte une pluralité de modules échangeurs de chaleur disposés en mur. Dans cet exemple, la zone E comporte deux murs A et B, de modules M1, M2,...Mn et M1', M2',...Mn' connectés fluidiquement en série.

Chaque mur comporte des modules disposés les uns à côté des autres et superposés les uns sur les autres.

Un mur de modules comporte au moins deux modules.

Le dispositif de récupération d'énergie D1 comporte également deux parois latérales L s'étendant le long de l'axe Y de part et d'autre des deux murs et guidant latéralement les fluides, une paroi supérieure S et une paroi inférieure I.

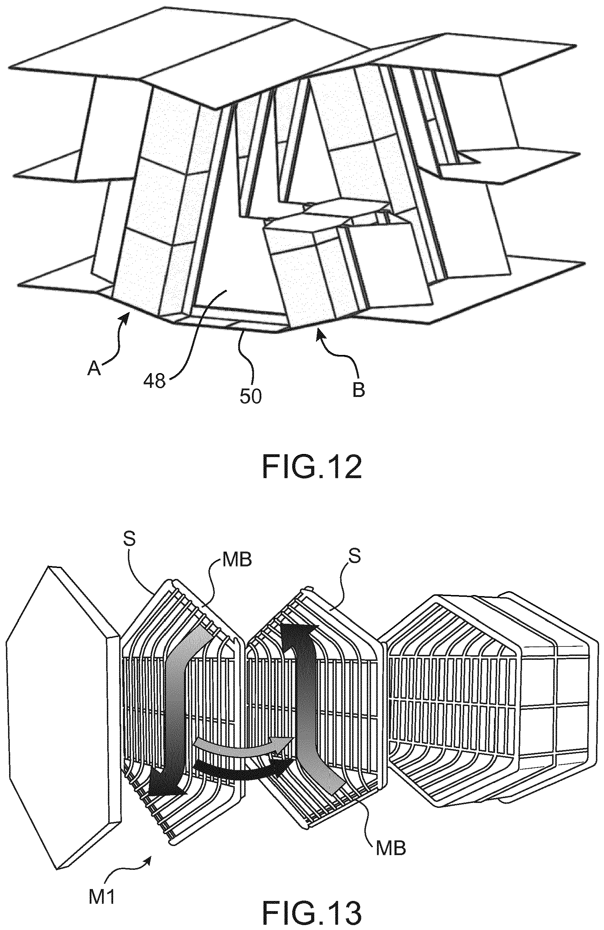

Sur la figure 2, on peut voir la zone E seule. Sur la figure 13 un module échangeur M1 représenté seul. Il comporte des membranes MB séparées par des séparateurs S, ménageant entre les membranes MB des canaux. L'alimentation des canaux se fait transversalement par rapport à la direction de l'empilement. Le flux d'air est schématisé par les flèches F. Les membranes sont au moins étanches aux gaz.

Le module M1 comporte une première face 2 et une deuxième face 4 opposées, la première face comporte deux ouvertures d'accès A2-1, A2-2 à deux chemins de circulation C1 et C2 (symbolisés par des flèches) au sein du module. La deuxième face 4 comporte deux ouvertures d'accès A4-1 et A4-2 aux deux chemins de circulation. Les modules sont disposés de sorte que, comme on peut le voir sur les figures 1 et 2, les directions des chemins C1 et C2 se croisent, mais physiquement les chemins C1 et C2 sont séparés de manière étanche l'un de l'autre.

Pour simplifier la description, l'air entrant par le distributeur D1 et sortant du distributeur D2 sera désigné « air vicié » et l'air sortant du distributeur D1 et entrant dans le distributeur D2 sera désigné « air neuf ». L'air vicié emprunte le chemin C1 et l'air neuf emprunte le chemin C2.

Dans cet exemple, chacun des faces est configurée de sorte que les ouvertures d'accès soient dans deux plans distincts. Un exemple dans lequel les faces seraient planes et les ouvertures d'accès dans le même plan ne sort pas du cadre de la présente invention.

Les modules de chaque mur sont disposés de sorte que les ouvertures d'accès à un même chemin de tous les modules superposés soient alignées selon un axe vertical, et que les ouvertures d'accès à un même chemin d'accès de deux modules adjacentes soient adjacentes. Ainsi dans cet exemple, chaque mur comporte des paires de colonnes adjacentes d'ouvertures d'accès à un même chemin.

Les murs A et B sont connectés de manière étanche de sorte à assurer une continuité des chemins C1 et C2 et éviter un mélange des deux fluides.

Les distributeurs D1 et D2 sont connectés chacun de manière étanche aux ouvertures d'accès, de sorte à guider l'air en entrée et en sortie à travers tous les modules, tout en empêchant un mélange entre l'air circulant dans les chemins C1 et l'air circulant dans les chemins C2. Dans cet exemple, le distributeur D1 est connecté au mur A et le distributeur D2 est connecté au mur B.

Selon l'invention, les distributeurs D1 et D2 comportent au moins une pièce en toile souple T étanche aux fluides gazeux, dans l'exemple décrit étanche à l'air.

Dans la présente demande, on entend par « toile » un matériau relativement souple pouvant offrir une grande conformabilité et présentant une épaisseur très faible par rapport à sa surface.

Le matériau peut être un matériau tissé, un matériau non-tissé, par exemple obtenu par extrusion, un matériau intissé par exemple obtenu par compactage.

Une toile comportant un matériau intissé est par exemple en Tyvek® enduit.

Dans un autre exemple, la toile peut être métallique et enduite.

Dans un autre exemple, la toile est une toile polymère tissée ou non tissée, tel que polyester et comporte un tissage métallique assurant un renfort métallique.

Dans un exemple, la toile comporte des fibres en matériau synthétique tissées et un revêtement ou une enduction assurant l'étanchéité aux fluides et éventuellement la résistance à l'environnement de travail. Par exemple, les fibres sont réalisées en un matériau polymère choisi parmi la liste non exhaustive suivante : le caoutchouc, tel que l'EPDM (éthylène-propylène-diène monomère), le caoutchouc éthylène propylène), le polyester tissé, enduit avec du polyuréthane(PU) ou du polyvinylchlorure (PVC), le PU ou PVC en feuille, polyamide tissé, par exemple du nylon tissé, enduit avec PU.

Dans un autre exemple, la toile comporte un matériau naturel, par exemple du coton tissé et huilé.

Le matériau de la toile peut être avantageusement choisi en fonction des fluides gazeux à distribuer, des échanges à réaliser entre les fluides, et/ou la tenue en température souhaitée, et/ou le tenu en température, du différentiel de pression entre les deux fluides, et/ou des produits corrosifs transportés par les fluides.

La mise en oeuvre de matériau synthétique permet d'éviter les risques de corrosion notamment par rapport à l'air marin.

Dans la suite de la description, les termes « toile » et « pièce en toile » seront utilisés indifféremment.

En outre, l'épaisseur de la toile est choisie en fonction du différentiel de pression inter-fluide et des vitesses de fluide mis en jeu.

De préférence, la toile a une épaisseur comprise entre 1 mm et 10 mm, et très avantageusement entre 2 mm et 5 mm.

En variante, la toile peut être une toile composite, par exemple renforcée avec des fibres, par exemple des fibres de carbone et/ ou des inserts de renfort ou guides peuvent être utilisés pour s'assurer que le distributeur conserve sa forme et ne s'affaisse pas sous son poids. Par exemple, les renforts peuvent être des pièces en polymère thermosoudées ou thermocollées, voire des pièces métalliques fines, glissées dans des logements formés dans la toile, par exemple entre deux épaisseurs de toile.

De manière avantageuse, dans une application à un système de ventilation traitant des flux d'air entre -20°c et 50°C, la toile est en polychlorure de vinyle (PVC). La toile T comporte généralement plusieurs pièces fixées les unes aux autres de manière étanche par exemple par soudure, par exemple par thermosoudure, ou par collage, par exemple par thermocollage. La forme de chaque pièce et leur assemblage les uns par rapport aux autres permettent de réaliser un distributeur de forme complexe adaptée à la forme de la zone d'échange thermique, notamment à la répartition et à la disposition relative des ouvertures d'accès.

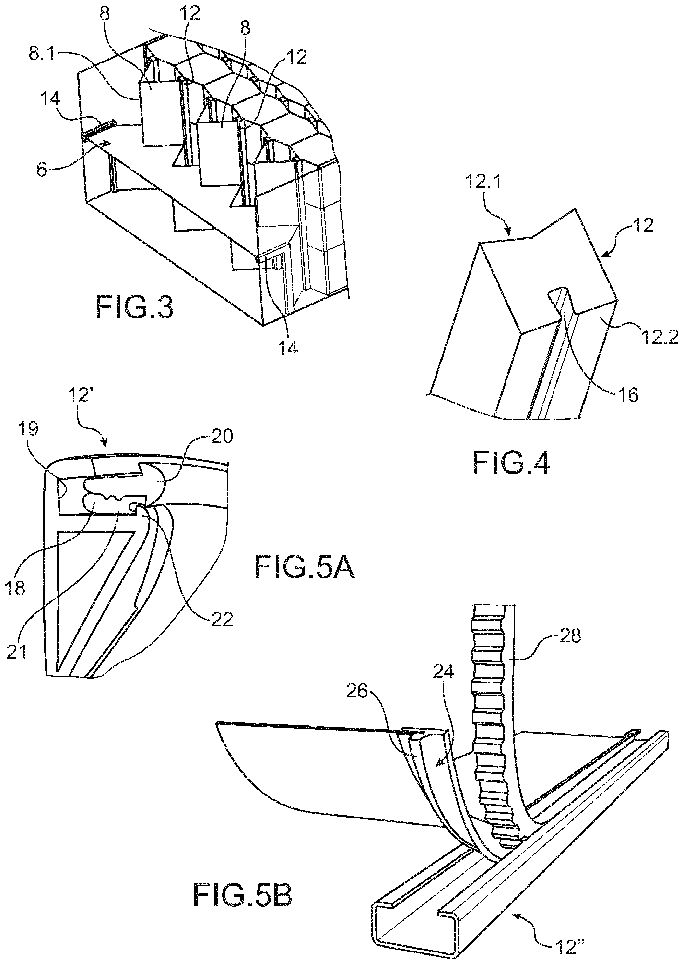

Dans cet exemple, les deux distributeurs ont des formes très proches. Seul le distributeur D1 sera décrit en détail. Celui-ci est représenté seul sur la figure 3.

Le distributeur D1 comporte un élément de séparation 6 destiné à séparer l'air vicié et l'air neuf. Dans cet exemple, l'élément de séparation 6 est disposé horizontalement sensiblement au niveau du plan médian du mur A. Dans cet exemple, l'air vicié pénètre dans le distributeur dans la partie supérieure, et l'air neuf sort du distributeur dans la partie inférieure.

Le distributeur D1 comporte également des éléments de guidage 8 assurant à la fois le guidage de l'air vicié vers les ouvertures d'accès des chemins C1 de tous les modules et le guidage de l'air neuf sortant des chemins C2 de tous les distributeurs.

Dans cet exemple, l'élément de séparation comporte un bord 6.1 découpé en dent de scie, la distance entre deux dents correspondant à la distance dans la direction X sur laquelle s'étendent deux ouvertures d'accès à un même chemin. Les éléments de guidage 8 s'étendent dans la direction Z et sont fixés aux rebords de deux dents adjacentes, et de sorte que les éléments de guidage s'étendent successivement au-dessus et au-dessous du plan contenant l'élément de séparation 6.

En variante, le bord 6.1 de l'élément de séparation 6 comporte des ondulations, par exemple formées par une succession de demi-cercles ou d'ogives.

Le guidage de l'air vicié et de l'air neuf sont schématisés par les flèches G1, G2 respectivement. Dans cet exemple, le distributeur D1 peut comporter huit morceaux de toile soudés ou collés. Chaque élément de guidage 8 peut être d'un seul tenant, ce qui permet d'éviter la réalisation d'une étanchéité supplémentaire, ou comporter deux morceaux soudés entre eux le long de l'axe Z, ce qui offre une certaine rigidité à l'élément de guidage.

Les éléments de guidage 8 délimitent des canaux verticaux.

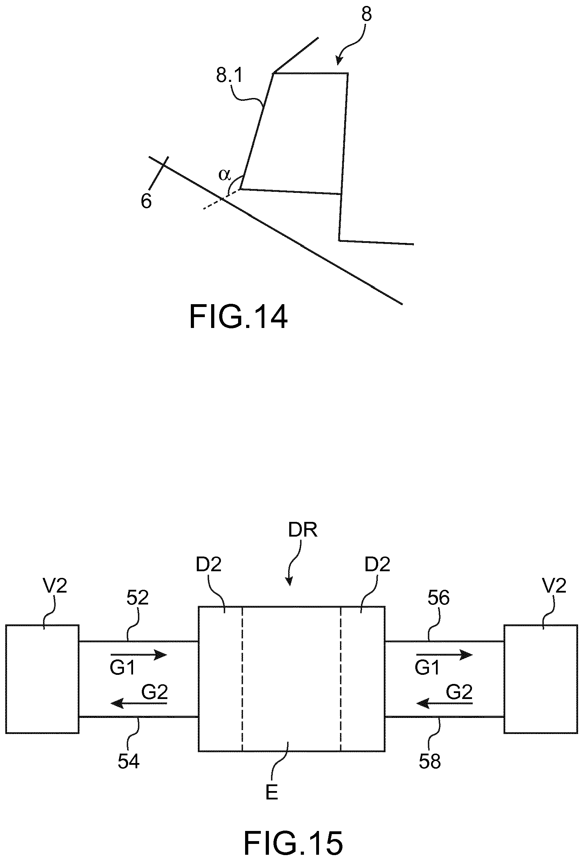

Dans cet exemple, les éléments de guidage 8 comportent une arête 8.1 perpendiculaire à l'élément de séparation 6. Dans une variante avantageuse représentée sur la figure 14, l'arête 8.1 de l'élément de guidage 8 est inclinée de sorte à former un angle α supérieure à 90° avec l'élément de séparation 6, ce qui permet de réduire les chutes de pression.

La toile ainsi confectionnée est fixée de manière étanche aux modules et aux parois latérales L.

De manière très avantageuse, la toile est fixée au moyen de profilés eux-mêmes fixés sur les échangeurs et sur les parois latérales L.

Sur les figures 2, on peut voir des profilés 12 s'étendant sur toute la hauteur du mur A et des profilés 14 fixés sur les parois latérales.

Sur la figure 4, on peut voir un exemple de profilé 12. Le profilé comporte une face 12.1 présentant un profil à deux pans destiné à venir en contact avec l'arête reliant les deux plans dans lesquels les deux ouvertures d'accès A1-1- et A1-2 s'étendent. Le profilé comporte une deuxième face 12.2 opposée à la première face 12.1 comportant une rainure 16 s'étendant sur toute la longueur du profilé et destinée à recevoir un bord de la toile.

Les profilés 12 s'étendent sur toute la hauteur du mur A. Dans cet exemple, le bord de l'élément de guidage est fixé sur le profilé 12 par un montage glissière de type queue d'aronde. Le bord de l'élément de guidage comporte un bourrelet qui est glissé dans la rainure. La rainure a une section sensiblement triangulaire et le bourrelet peut avoir une section triangulaire correspondante ou une section ronde par exemple. De préférence, une pièce de pincement est introduite dans la rainure pour assurer un maintien par pincement du bourrelet.

Dans un autre exemple, le bourrelet est monté à force dans la rainure. Dans une autre variante, on réalise un montage à chaud du bourrelet, pour cela le bourrelet est chauffé pour le rendre plus déformable afin de faciliter le montage en force. En refroidissant, le bourrelet comble le volume restant de la rainure et assure l'étanchéité.

Dans le cas d'un bourrelet en PVC, la température de transition vitreuse du PVC étant 80°C, le bourrelet est chauffé à une température d'environ 80°C pour faciliter son montage. Il est à noter que, pour démonter le bourrelet, celui-ci est avantageusement à nouveau chauffé. Néanmoins ce type de montage offre une durée de vie plus courte que pour un montage mettant en oeuvre une pièce de pincement.

Pour le démonter, il suffit de réchauffer la rainure localement et de retirer le bourrelet.

La fixation au profilé 14 peut se faire selon l'un des modes de fixation décrits ci-dessus.

Les profilés 12 sont fixés aux parois supérieure et inférieure au niveau de leurs extrémités longitudinales. Ils sont avantageusement fixés par des équerres de serrage à des profilés fixés sur les parois supérieure et inférieure.

Les profilés 14 sont conformés de sorte que la toile délimite, avec les parois latérales L, des canaux latéraux guidant l'air vicié dans l'exemple représenté. Dans cet exemple, chaque profilé 14 comporte deux portions droites de profilés disposées à angle droit. En variante, un profilé d'un seul tenant de forme courbe est envisageable.

Par exemple le profilé 14 est fixé à la paroi, par exemple au moyen de vis.

Sur la figure 5A, on peut voir un autre exemple de fixation d'un bord de la toile dans un profilé 12'. Les bords de la toile comportent un bourrelet 18 destiné à être inséré dans la rainure. le bourrelet 18 est par exemple formé par une surépaisseur de toile, par exemple formée en repliant le bord de la toile, ou une excroissance ou bourrelet par exemple formée lors de l'extrusion, qui est Une pièce de pincement 20 est montée en force dans la rainure après mise en place du bourrelet et assure un pincement du bord dans la rainure et son maintien étanche dans la rainure. De manière avantageuse, la rainure comporte un rebord 22 et le bourrelet 18 comporte une lèvre 21 venant en appui contre la face intérieure du rebord 22, ce qui améliore encore l'étanchéité du montage.

Sur la figure 5B, peut voir un autre exemple de fixation d'un bord de la toile dans un profilé 12". Le profilé a une section en C, le bourrelet 24 comporte une lèvre 26 sensiblement parallèle à la toile et définissant une gorge s'étendant le long du bord de la toile et destinée à être montée sur un bord du profilé, et un élément de blocage 28 est monté dans le profilé empêchant le bourrelet de s'échapper. Dans cet exemple, le bourrelet est surmoulé sur la toile. En variante, le bourrelet est thermoformé sous presse.

Un surmoulage en matériau synthétique, pat exemple en polymère, peut être réalisé sur le profilé, et destiné à venir en contact avec la toile et améliorer l'étanchéité.

D'une manière avantageuse, les profilés sont réalisés en aluminium ou en alliage d'aluminium. Un traitement pour résister à la corrosion peut être prévu suivant le matériau utilisé et l'application, par exemple dans le cas d'une application dans un environnement marin. En variante les profilés sont en acier de type inox.

De manière encore plus avantageuse, les profilés sont en matériau plastique, ce qui évite tout risque de corrosion, notamment dans une installation traitant de l'air salin.

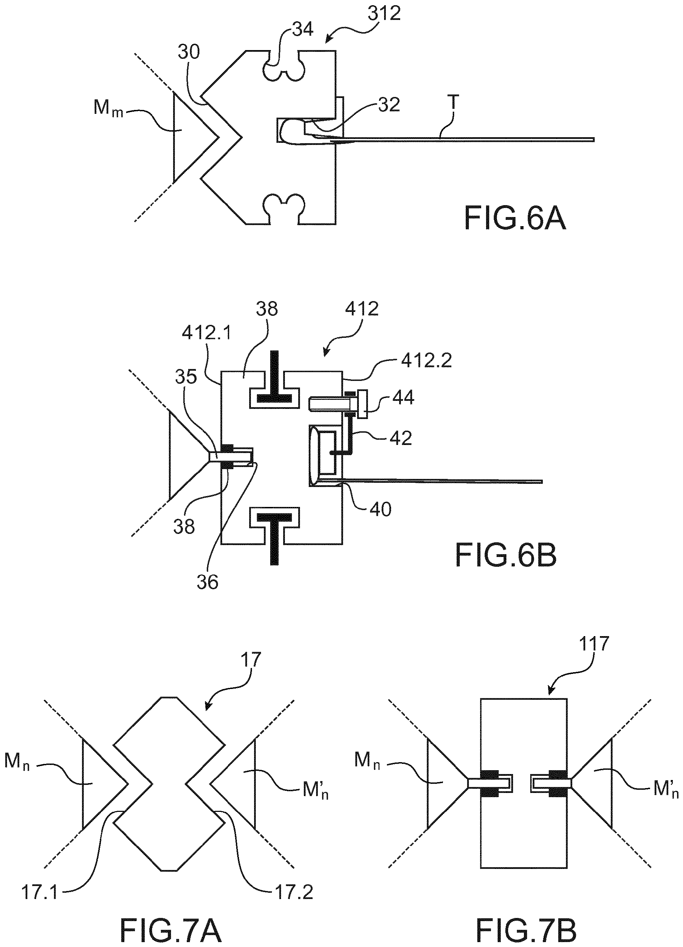

Sur la figure 6A, on peut voir un exemple de réalisation d'un profilé 312 qui assure à la fois le maintien de la toile et le maintien des échangeurs.

Le profilé 312 comporte une face munie d'une rainure 30 à section en V venant en appui contre un ou plusieurs modules Mn empilés et une face munie d'une rainure 32 à section rectangulaire, destinée à la fixation de la toile. Le mode de montage est proche de celui de la figure 5A.

En variante, un joint sous forme de bande peut être interposé entre le ou les modules et le profilé pour améliorer l'étanchéité.

Dans l'exemple représenté, le profilé comporte sur ses faces latérales des rainures 34 destinées à la fixation des profilés sur la structure du dispositif. La forme des rainures 34 n'est en aucun cas limitative.

Sur la figure 6B, on peut voir un autre exemple de profilé 412. Dans cet exemple, le module comporte une première face avec deux pans inclinés l'un par rapport à l'autre, chacun comportant une ouverture d'accès à un chemin différent. L'arête reliant les deux pans comporte un élément fin 35 en saillie de l'arête en direction du profilé 412 et s'étendant sur toute la hauteur de l'échangeur.

Dans l'exemple représenté, le profilé 412 a sensiblement une section rectangulaire et comporte une première face 412.1 plane en regard d'un ou de plusieurs modules. La première face comporte une rainure 36 recevant l'élément fin 35. Un moyen d'étanchéité 38 est prévu entre l'élément fin 35 et la rainure 36.

La deuxième face 412.2 du profilé comporte une rainure 40 également recevant un bord de la toile qui est serré contre le fond de la rainure 40 par une pièce de serrage 42 fixée sur le profilé au moyen d'une vis 44. En variante des tiges filetées sont soudées à la paroi latérale le long des zones où l'on souhaite fixer la toile et la pièce de serrage 42 est vissée sur les tiges filetées.

En variante, notamment pour la fixation aux parois latérales les bords de la toile sont maintenus par serrage par des baguettes vissées directement dans les parois latérales et dans le bord la toile. Cette réalisation évite la mise en oeuvre de profilé. Une étanchéité est réalisée au niveau des vis.

Comme expliqué ci-dessus sur la figure 1, deux murs d'échangeurs sont connectés en série. Sur la figure 7A, on peut voir un exemple de profilé de connexion inter-module 17 permettant cette connexion. Il comporte deux faces opposées avec chacune une rainure 17.1, 17.2 à section en V recevant, pour l'une l'arête d'un module Mn ou les arêtes des modules d'un mur et pour l'autre l'arête d'un module Mn' ou les arêtes des modules de l'autre mur.

Sur la figure 7A, on peut voir un autre exemple 117 de ce profilé de connexion inter-module qui reprend le mode de montage du profilé de la figure 6B.

Dans l'exemple de la figure 1, les ouvertures d'accès pour le même fluide de deux modules distincts sont disposées côte à côte, les éléments de guidage sont alors commun pour deux modules côte à côté. En variante, les ouvertures d'accès à des chemins différents sont disposées côté à côte. Dans ce cas les distributeurs sont adaptés, ils comportent des éléments de guidage pour chaque ouverture d'accès d'une ligne de modules. En variante encore, les modules sont disposés de sorte que dans une colonne les ouvertures d'accès pour un même fluide ne soient plus superposées, dans ce cas les distributeurs sont configurés pour connecter séparément chaque ouverture d'accès, néanmoins la structure des distributeurs devient très complexe et les risques de fuite sont augmentés.

Par ailleurs, dans l'exemple de la figure 1, les modules sont disposés les uns par rapport aux autres de sorte que les ouvertures d'accès pour un même fluide soient alignées en colonne. En variante, ils sont disposés de sorte que les ouvertures d'accès pour un même fluide sont alignées horizontalement. Les distributeurs sont alors configurés pour assurer la distribution et la collecte des fluides selon cette disposition.

Dans un autre exemple, le dispositif comporte un seul mur de modules échangeurs thermiques, les distributeurs D1 et D2 sont alors connectés à la première et à la deuxième face de chaque module.

Dans un autre exemple et en fonction des spécifications de perte de charge plus de deux murs d'échangeurs peuvent être mis en oeuvre.

En outre, on peut envisager de relier les murs entre eux au moyen d'éléments en toile formant des conduits entre les isolateurs de deux murs adjacents.

De manière préférée et comme c'est le cas sur la figure 1, les circulations de l'air vicié et de l'air neuf sont à contre-courant, ce qui assure une très grande efficacité d'échange. En variante, les circulations peuvent être à co-courant, les distributeurs sont identiques et le sens de circulation pour l'un des fluides est inversé par rapport à celui de la figure 1, les deux fluides entrent pas le même côté de l'un des murs et ressortent du même côté de l'un des murs.

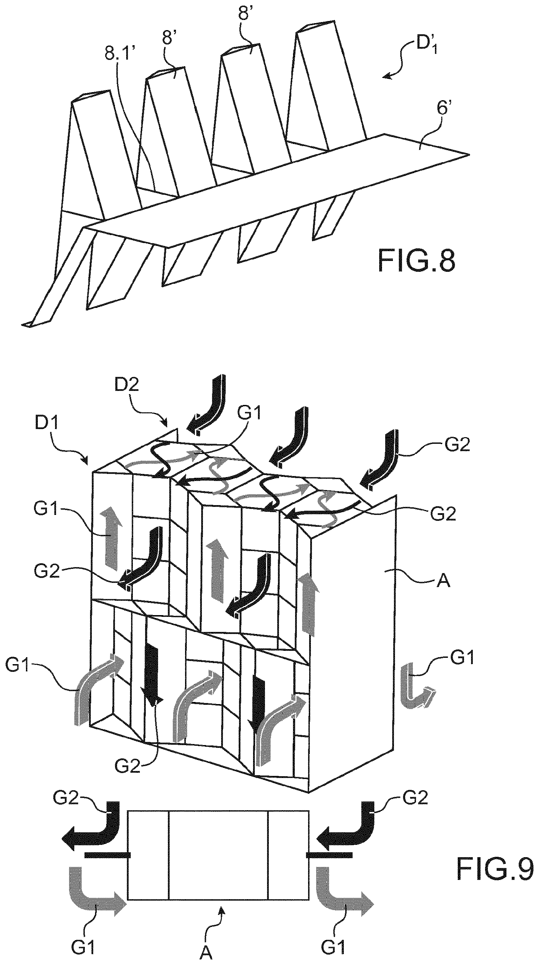

Sur la figure 8, on peut voir un autre exemple de distributeur D1'. Celui-ci-diffère du distributeur D1 par la forme des éléments de guidage et de l'élément de séparation. L'élément de séparation 6' a la forme d'une bande rectangulaire et les éléments de guidage 8' situés d'un côté de l'élément de séparation 6' sont reliés aux éléments de guidage 8' situés de l'autre côté de l'élément de séparation 6' ceux-ci étant collés ou soudés l'un au l'autre par leurs bords d'extrémité 8.1'. De manière avantageuse et comme cela a été décrit ci-dessus, les éléments de guidage sont inclinés par rapport à l'élément de séparation pour réduire les pertes de pression. La fixation aux modules est réalisée de manière similaire à la fixation du distributeur D1.

Dans le dispositif de la figure 1, l'air vicié entre au-dessus de l'élément de séparation du distributeur D1 et sort au-dessous de l'élément de séparation du distributeur D2.

Dans le dispositif de la figure 9, l'air vicié (flèche G1) entre au-dessous de l'élément de séparation du premier distributeur D1 et sort au-dessous de l'élément de séparation du deuxième distributeur, et l'air neuf (flèche G2) entre au-dessus de l'élément de séparation du deuxième distributeur D2 et sort au-dessus du premier distributeur. Ce changement de circulation est obtenu en retournant le premier distributeur de 180° autour de l'axe X.

Il est très facile de modifier le dispositif de récupération pour s'adapter à différentes orientations du flux et/ou configurations de l'environnement extérieur.

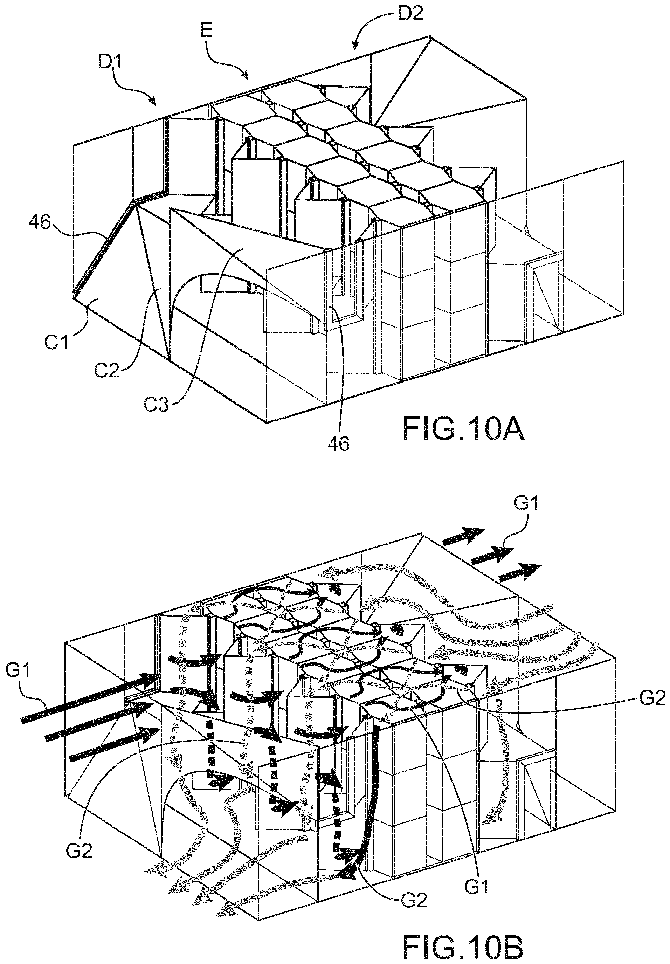

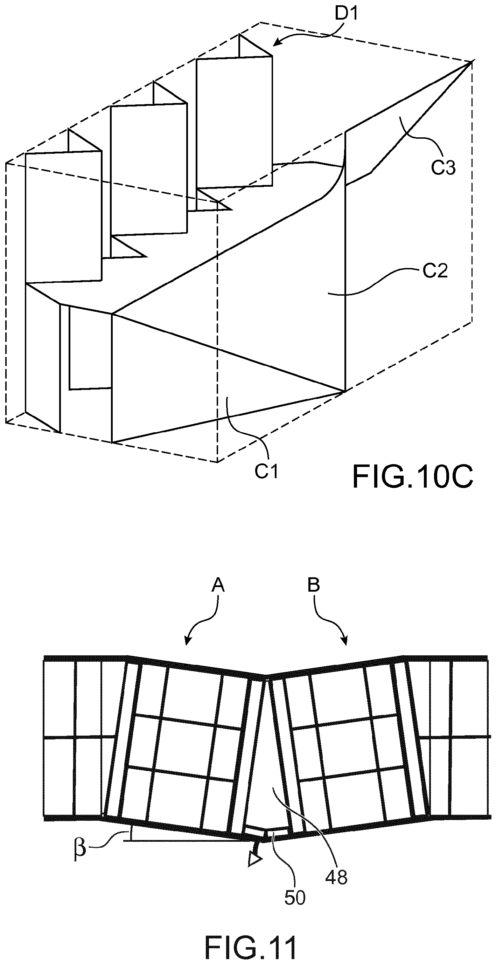

Sur les figures 10A, 10B et 10C, on peut voir un autre exemple de dispositif de récupération d'énergie, dans lequel les chemins d'écoulement des flux d'air vicié et d'air en entrée et en sortie du dispositif sont séparés par un plan vertical et non par un plan horizontal. Cette modification est obtenue en prolongeant l'élément de séparation des deux distributeurs en éloignement de la zone d'échange. Des morceaux de toile sont rapportés par soudage et sont conformés pour modifier la configuration des flux d'écoulement. Par exemple, l'extension de toile ajoutée au distributeur D1 comporte trois pièces de toile C1, C2, C3. La pièce C2 est fixée aux pièces C1 et C3, par exemple par soudage. Dans cet exemple, les pièces C1 et C3 sont triangulaires et la pièce C2 est rectangulaire et est vrillée de sorte que deux côtés opposés soient raccordés, pour l'un à un côté de la pièce C1 et pour l'autre à un côté de la pièce C3.

Les bords extérieurs des pièces C1 et C4 sont fixés aux parois latérales par deux profilés 46 en prolongation des profilés 14. Les bords intérieurs des pièces C1 et C4 sont fixées chacune à un bord des pièces C2 et C3 qui sont fixées l'une à l'autre par un bord. Dans l'exemple représenté le bord reliant les pièces C2 et C3 présente une courbure limitant les pertes de charge. Avantageusement des renforts peuvent être mise en oeuvre pour assurer une tenue dans le temps de cette configuration.

Sur la figure 10B, on peut voir la circulation de l'air vicié (flèche G1) et de l'air neuf (flèche G2).

On constate que l'invention permet de réaliser relativement facilement des formes très complexes, difficilement réalisables avec des pièces de tôle. En outre, les distributeurs ne posent pas de problèmes de transport, leur encombrement avant montage étant très réduit.

Grâce à la mise en oeuvre de toile pour réaliser les distributeurs, on dispose d'une grande flexibilité de mise en oeuvre pour pouvoir s'adapter à des configurations d'écoulement particulières. En outre cette adaptation est rapide et relativement facile.

Toute autre configuration de distributeur est envisageable.

En variante, les profilés ou baguette de fixation, par exemple en PVC, sont surmoulés sur les bords de la toile, par exemple en PVC.

Sur la figure 11, on peut voir une représentation schématique d'un dispositif mettant en oeuvre deux murs A et B de modules échangeurs qui diffère de celui de la figure 1, en ce que les deux murs d'échangeurs sont inclinés par rapport à la direction horizontale pour faciliter l'évacuation de condensats des modules échangeurs qui peuvent potentiellement apparaître dans les modules, i.e. de sorte que la direction de circulation des chemins soit inclinés par à l'horizontale pour assurer un écoulement des condensats par l'une ou l'autre des ouvertures d'accès.

Dans l'exemple représenté, les murs A et B sont inclinés l'un vers l'autre de sorte que les condensats se réunissent dans une zone entre les parties inférieures des murs A et B.

De manière très avantageuse, la connexion latérale entre les deux murs, et plus particulièrement entre les ouvertures d'accès du mur A et du mur B, de sorte à assurer une continuité des chemins d'écoulement, est réalisée par des éléments en toile 48 tendus entre les deux murs. De préférence les éléments de toile sont fixés au moyen de profilés fixés sur chacune des murs. Les éléments de toile 48 remplissent la fonction des profilés 17 sur la figure 1. Dans cet exemple, les éléments de toile 48 ont sensiblement une forme triangulaire et sont disposés parallèlement les uns par rapport aux autres. Sur la figure 12, on peut voir une vue en perspective partiellement arrachée d'un exemple de réalisation du dispositif de la figure 11.

La forme des distributeurs est modifiée du fait de l'inclinaison des murs, mais cette modification est minime et facilement exécutable, les bords de la toile sont coupés en biais au lieu d'être coupés droit.

Le fond inférieur est formé par une tôle 50. Sur la figure 11, la tôle comporte deux pans inclinés entre lesquels les condensats sont regroupés. Sur la figure 12, la tôle 50 est plane. Par exemple un système de siphon situé au point bas du fond inférieur permet d'évacuer les condensats.

Dans le cas d'un fond plan, on peut utiliser un siphon plat avec un point bas sur la face plane.

Les murs sont par exemple inclinés d'un angle β par rapport à la direction horizontale compris entre 5° et 30°, et avantageusement égal à 15°.

Dans l'exemple représenté, les murs de modules échangeurs sont avantageusement inclinés l'un vers l'autre, les condensats pouvant être collectés en une seule zone. En variante, les murs sont inclinés en éloignement l'un de l'autre ou sont parallèles entre eux après inclinaison, deux zones de récupération des condensats sont alors à prévoir.

Il sera compris que, dans un exemple où la zone d'échange comporte un mur de modules échangeurs, ce mur peut être incliné.

Sur la figure 15, on peut voir une représentation schématique d'un système de ventilation comportant un dispositif de récupération DR selon l'invention, par exemple le dispositif de la figure 1. Le système de ventilation est destiné à renouveler l'air vicié du volume V1 avec l'air neuf du volume V2. Le volume V1 est par exemple une salle à bord d'un bateau et le volume V2 est par exemple l'environnement extérieur.

Le système de ventilation comporte des moyens de connexion 52, 54 entre le premier distributeur D1 et le volume V1 et des moyens de connexion 56, 58 entre le deuxième distributeur D2 et le volume V2. Les moyens de connexion 52, 54, 56, 58 sont des connexions aérauliques du type de celles généralement utilisées dans les systèmes manipulant des gaz et sont bien connues de l'homme du métier.

Le premier distributeur D1 et le deuxième distributeur D2 peuvent être connectés en direct aux volumes V1 et V2 respectivement ou par l'intermédiaire de filtres et/ou de moyens d'aspiration, par exemple comportant un ou plusieurs ventilateurs, assurant la circulation de l'air entre V1 et V2 à travers les modules échangeurs.

L'air vicié aspiré dans le volume V1 est guidé par le distributeur D1 jusqu'au mur A, en empruntant les chemins C1 de tous les modules et ressort du mur B et est guidé par le distributeur D2 vers le volume V2. L'air neuf est aspiré dans le volume V2 et est guidé par le deuxième distributeur D2 vers le deuxième mur empruntant les chemins C2 de tous les modules et ressort du mur A et est guidé par le premier distributeur D1 dans le volume V1. Les circulations de l'air neuf et de l'air vicié dans les modules sont en continu et simultanées, ils échangent alors de la chaleur au sein des modules. L'air neuf entrant dans le volume V1 est alors réchauffé ou refroidi par échange thermique avec l'air vicié sortant de V1. Cet échange de chaleur se fait sans mélange des gaz. Les modules peuvent être des modules échangeurs enthalpiques, i.e. des modules échangeurs dans lesquels les échanges ont lieu à travers des membranes et permettent se séparer l'air neuf de l'air vicié. Dans un exemple de réalisation, les membranes sont imper-respirantes, i.e. imperméable à l'eau liquide et au gaz mais laissant passer la vapeur d'eau, alors il y a en plus d'un échange d'énergie sensible et un échange d'énergie latente sous forme de vapeur d'eau par transfert par diffusion à travers les membranes du flux d'air les plus concentré en vapeur d'eau vers le flux d'air le moins concentré en vapeur d'eau. Une membrane imper-respirante comporte par exemple une enduction microporeuse ou un tissu à haute densité réalisé en microfibres, qui est imperméable aux gaz et à l'eau à l'état liquide mais qui est perméable à la vapeur d'eau.

Dans les exemples décrits ci-dessus, la récupération d'énergie s'effectue entre deux fluides. Il sera compris que le dispositif s'applique également à plus de deux fluides. Les modules peuvent comporter par face plus de deux ouvertures d'accès distinctes et délimités en leur sein plus de deux chemins d'écoulement. Les distributeurs sont alors configurés pour ménager au moins trois zones étanches les unes par rapport aux autres de circulation fluidiques.

Le dispositif de récupération d'énergie selon l'invention offre une grande liberté de forme, par exemple il peut présenter une forme relativement aplatie, tout en présentant une réduction de masse sensible par rapport aux dispositifs actuels.

La présente invention est également adaptée à une utilisation nomade ou portative. En effet, le dispositif de récupération offre une certaine facilité de montage/démontage et son transport est facilité, notamment du fait de l'encombrement réduit des distributeurs fluidiques à l'état démonté. Il est donc adapté à certaines installations que l'on souhaite transporter et qui sont donc montées et démontées de manière fréquente, comme les installations pour le traitement de l'air ou de fumée, ponctuel, comme par exemple des sites éphémères accueillant du public, ou le traitement d'une pollution thermique d'un effluent gazeux...

Le dispositif de récupération est notamment mis en oeuvre dans des systèmes de ventilation, et est particulièrement adapté dans des applications requérant une faible hauteur, par exemple pour équiper un bateau, le système de ventilation étant logé dans le pont d'un bateau dont la hauteur est relativement faible. En outre sa résistance augmentée à la corrosion du à l'air marin, le rend également bien adaptée aux applications marines.

## Revendications

1. Dispositif de récupération d'énergie entre au moins un premier et un deuxième fluides gazeux comportant une zone d'échange d'énergie (E) comprenant au moins un premier chemin d'écoulement (C1) pour le premier fluide, et au moins un deuxième chemin d'écoulement (C2) pour le deuxième fluide, les premier (C1) et deuxième (C2) chemins d'écoulement s'étendant entre une première extrémité et une deuxième extrémité de la zone d'échange d'énergie (E), les premier (C1) et deuxième (C2) chemins d'écoulement étant en échange énergétique l'un avec l'autre et séparés l'un de l'autre de manière étanche au moins aux gaz, et un premier distributeur fluidique (D1) connecté à la première extrémité et un deuxième distributeur fluidique (D2) connecté à la deuxième extrémité, chaque premier (D1) et deuxième (D2) distributeur comportant au moins un premier canal connecté au premier chemin (C1) pour assurer l'alimentation en premier fluide et/ou la collecte dudit premier fluide, et au moins un deuxième canal connecté au deuxième chemin (C2) et assurant une alimentation en deuxième fluide et/ou une collecte du deuxième fluide, le premier canal et le deuxième canal étant isolés de manière étanche l'un par rapport à l'autre, dans lequel le premier (D1) et/ou le deuxième (D2) distributeur comportent au moins une pièce en toile (T) étanche aux fluides gazeux formant des parois des premier et deuxième canaux.

2. Dispositif de récupération d'énergie selon la revendication 1, dans lequel le premier (D1) et/ou le deuxième (D2) distributeur comportent plusieurs pièces en toile fixées les unes aux autres de manière étanche, de sorte à délimiter les premier et deuxième canaux, par exemple par thermosoudage ou thermocollage.

3. Dispositif de récupération d'énergie selon la revendication 1 ou 2, dans lequel la au moins une pièce en toile est en matériau synthétique étanche au gaz, la au moins une pièce en toile étant avantageusement en polychlorure de vinyl.

4. Dispositif de récupération d'énergie selon l'une des revendications 1 à 3, dans lequel la au moins une pièce en toile comporte un matériau support et un revêtement étanche aux fluides gazeux.

5. Dispositif de récupération d'énergie selon l'une des revendications 1 à 4, comportant des moyens de fixation des bords de la au moins une pièce en toile du premier et/ou du deuxième distributeur à la zone d'échange d'énergie, les moyens de fixation comprenant des profilés situés au niveau de la première et/ou de la deuxième extrémité de la zone d'échange d'énergie et auxquels les bords de la au moins une pièce en toile sont fixés, avantageusement les bords de la au moins une pièce en toile du premier (D1) et/ou du deuxième distributeur(D2) comportant des surépaisseurs montées dans les profilés (12, 14) et/ou les dispositif comportant des moyens d'étanchéité entre les bords de la toile et les profilés.

6. Dispositif de récupération d'énergie selon l'une des revendications 1 à 5, dans lequel la au moins une pièce en toile comporte des renforts et/ou la au moins une pièce en toile a une épaisseur comprise entre 1 mm et 10 mm.

7. Dispositif de récupération d'énergie selon l'une des revendications 1 à 6, dans lequel la zone d'échange thermique comporte au moins un premier ensemble (A) de n modules échangeurs thermiques (M1,...Mn), n étant supérieur ou égal à 2, chacun des modules échangeurs comporte au moins une portion du premier chemin et du deuxième chemin d'écoulement, chaque module échangeur comportant une première face comportant au moins une ouverture d'accès (A2-1, A2-2) à chaque premier (C1) et deuxième (C2) chemin, et une deuxième face comportant au moins une ouverture d'accès (A4-1, A4-2) à chaque premier (C1) et deuxième (C2) chemin, les modules échangeurs étant avantageusement superposés et juxtaposés de sorte à former un premier mur.

8. Dispositif de récupération d'énergie selon la revendication 7, dans lequel la zone d'échange thermique comporte au moins un deuxième ensemble (B) de n modules échangeurs (M1,...Mn) disposés sous forme d'un deuxième mur, chacun des modules échangeurs comportant une portion du premier chemin (C1) et du deuxième chemin (C2) d'écoulement, chaque module comportant une première face comportant au moins une ouverture d'accès (A2-1, A2-2) à chaque premier et deuxième chemin, et une deuxième face comportant au moins une ouverture d'accès (A4-1, A4-2) à chaque premier et deuxième chemin, ledit dispositif comportant des moyens de connexion étanche entre le premier ensemble (A) et le deuxième ensemble (B) de sorte que les chemins d'écoulement (C1, C2) dans un module échangeur du premier ensemble (A) se poursuivent dans un module échangeur du deuxième ensemble (B).

9. Dispositif de récupération d'énergie selon la revendication 7 ou 8, dans lequel, pour l'un et/ou l'autre des premier et deuxième ensembles, les modules sont disposés de sorte qu'au moins une partie des modules présente une ouverture d'accès à un des chemins directement adjacente à l'ouverture d'accès au même chemin d'un module directement adjacent.

10. Dispositif de récupération d'énergie selon la revendication 9 en combinaison avec la revendication 5, dans lequel les profilés assurent également le maintien des modules échangeurs les uns par rapport aux autres.

11. Dispositif de récupération d'énergie selon l'une des revendications 7 à 10, dans lequel les modules échangeurs sont inclinés de sorte à assurer l'évacuation des condensats par gravité des premier et deuxième chemins, les circulations dans le premier chemin (C1) et le deuxième chemin (C2) étant avantageusement à contre-courant l'une de l'autre.

12. Système de ventilation comportant au moins un dispositif de récupération d'énergie selon l'une des revendications précédentes et des moyens de connexion entre le premier canal et le deuxième canal du premier distributeur et un premier volume dont on souhaite renouveler l'air, et des moyens de connexion entre le premier canal et le deuxième canal du deuxième distributeur et un deuxième volume formant source d'air pour renouveler l'air du premier volume.

13. Procédé de fabrication d'un dispositif de récupération d'énergie selon l'une des revendications 1 à 11, comportant :
a) la réalisation de la zone d'échange thermique,
b) la réalisation des premier et/ou deuxième distributeurs à partir d'au moins une pièce en toile étanche aux fluides gazeux,
c) la connexion de manière étanche du premier et du deuxième distributeur à la zone d'échange thermique.

14. Procédé de fabrication selon la revendication précédente, le dispositif de récupération d'énergie étant celui de la revendication 7, dans lequel l'étape a) comporte l'empilement de modules échangeurs thermiques.

15. Procédé de fabrication selon la revendication 13 ou 14, dans lequel l'étape b) comporte un assemblage de plusieurs pièces en toile étanche aux fluides gazeux, l'assemblage entre les pièces en toile étant étanche, par exemple réalisé par thermocollage ou thermosoudage et/ou, dans lequel l'étape c) met en oeuvre des profilés dans lesquels des bords de la au moins une pièce en toile sont maintenus serrés.
